(19) Europäisches Patentamt
European Patent Office
Office européen des brevets

(11) **EP 4 213 546 A1**

(12) **EUROPEAN PATENT APPLICATION**
published in accordance with Art. 153(4) EPC

(43) Date of publication:
**19.07.2023 Bulletin 2023/29**

(21) Application number: **21874457.1**

(22) Date of filing: **28.09.2021**

(51) International Patent Classification (IPC):
***H04W 48/18*** (2009.01)

(52) Cooperative Patent Classification (CPC):
**H04W 48/18; H04W 52/02;** Y02D 30/70

(86) International application number:
**PCT/CN2021/121247**

(87) International publication number:
**WO 2022/068797 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2020 CN 202011057997**

(71) Applicant: **Vivo Mobile Communication Co., Ltd.**
**Dongguan, Guangdong 523863 (CN)**

(72) Inventors:
• **CHEN, Li**
 **Dongguan, Guangdong 523863 (CN)**
• **PAN, Xueming**
 **Dongguan, Guangdong 523863 (CN)**

• **JIANG, Dajie**
 **Dongguan, Guangdong 523863 (CN)**
• **TAMRAKAR, Rakesh**
 **Dongguan, Guangdong 523863 (CN)**
• **SUN, Peng**
 **Dongguan, Guangdong 523863 (CN)**
• **WU, Kai**
 **Dongguan, Guangdong 523863 (CN)**
• **SHEN, Xiaodong**
 **Dongguan, Guangdong 523863 (CN)**
• **LI, Na**
 **Dongguan, Guangdong 523863 (CN)**

(74) Representative: **Murgitroyd & Company**
**Murgitroyd House**
**165-169 Scotland Street**
**Glasgow G5 8PL (GB)**

(54) **NETWORK ACCESS METHOD, NETWORK ACCESS APPARATUS, TERMINAL, AND NETWORK SIDE DEVICE**

(57) This application provides a network access method, a network access apparatus, a terminal, and a network-side device. The network access method applied to the terminal includes: receiving a reference signal transmitted by a network-side device, where the reference signal includes a first reference signal, or includes a first reference signal and a second reference signal; and the first reference signal is an SFN-specific reference signal, or the second reference signal is a cell or transmission reception point-specific reference signal; and performing an initial access-related operation based on the received reference signal.

FIG. 2

**EP 4 213 546 A1**

**Description**

**CROSS-REFERENCE TO RELATED APPLICATIONS**

This application claims priority to Chinese Patent Application No. 202011057997.6 filed in China on September 29, 2020, which incorporated herein by reference in its entirety.

**TECHNICAL FIELD**

This application belongs to the field of communications technologies, and specifically, to a network access method, a network access apparatus, a terminal, and a network-side device.

**BACKGROUND**

As a future communication system deploys an increasingly higher frequency band, the coverage of a single cell (cell) or a transmission reception point (Transmission Reception Point, TRP) is getting increasingly smaller. In addition, a future mobile communication system will support more high-speed scenarios. This brings frequent mobility to a terminal, thereby introducing more terminal measurements, resulting in relatively high network overhead and power consumption of the terminal.

**SUMMARY**

An objective of embodiments of this application is to provide a network access method, a network access apparatus, a terminal, and a network-side device, which may resolve the problem of relatively high network overhead and power consumption of a terminal due to frequent mobility of the terminal.
To resolve the foregoing technical problems, this application is implemented as follows:
According to a first aspect, a network access method is provided, applied to a terminal and including:

receiving a reference signal transmitted by a network-side device, where the reference signal includes a first reference signal, or includes a first reference signal and a second reference signal; and the first reference signal is a single-frequency network SFN-specific reference signal, or the second reference signal is a cell or transmission reception point-specific reference signal; and
performing an initial access-related operation based on the received reference signal.

According to a second aspect, a network access apparatus is provided, including:

a first receiving module, configured to receive a reference signal transmitted by a network-side device, where the reference signal includes a first reference signal, or includes a first reference signal and a second reference signal; and the first reference signal is a single-frequency network SFN-specific reference signal, or the second reference signal is a cell or transmission reception point-specific reference signal; and
an execution module, configured to perform an initial access-related operation based on the received reference signal.

According to a third aspect, a network access method is provided, applied to a network-side device and including: transmitting a reference signal to a terminal, where the reference signal includes a first reference signal, or includes a first reference signal and a second reference signal; and the first reference signal is a single-frequency network SFN-specific reference signal, or the second reference signal is a cell or transmission reception point-specific reference signal.
According to a fourth aspect, a network access apparatus is provided, including:
a first transmitting module, configured to transmit a reference signal to a terminal, where the reference signal includes a first reference signal, or includes a first reference signal and a second reference signal; and the first reference signal is a single-frequency network SFN-specific reference signal, or the second reference signal is a cell or transmission reception point-specific reference signal.
According to a fifth aspect, a terminal is provided, including a processor, a memory, and a program or an instruction stored in the memory and executable on the processor, where the program or instruction, when executed by the processor, implements steps of the method according to the first aspect.
According to a sixth aspect, a network-side device is provided, including a processor, a memory, and a program or an instruction stored in the memory and executable on the processor, where the program or instruction, when executed by the processor, implements steps of the method according to the third aspect.

According to a seventh aspect, a readable storage medium is provided, storing a program or an instruction, where the program or instruction, when executed by a processor, implements steps of the method according to the first aspect; or implements steps of the method according to the third aspect.

According to an eighth aspect, a chip is provided, including a processor and a communication interface, where the communication interface is coupled to the processor, and the processor is configured to run a program or an instruction to implement the method according to the first aspect, or implement the method according to the third aspect.

According to a ninth aspect, a computer program product is provided, being stored in a non-volatile readable storage medium, where the computer program product, when executed by at least one processor, implements the method according to the first aspect; or implements the method according to the third aspect.

According to a tenth aspect, a network access apparatus is provided, configured to perform the method according to the first aspect, or the method according to the third aspect.

In this embodiment of this application, a system design deployed through the single-frequency network (Single-Frequency Network, SFN) provides a technical solution for the terminal to perform network access based on an SFN-specific reference signal, so that the terminal may successfully access the SFN. Because the terminal does not need to frequently perform cell selection, reselection, or switching between cells in an SFN range, and a measurement frequency of the terminal is reduced, network overhead and power consumption of the terminal may be reduced.

## BRIEF DESCRIPTION OF THE DRAWINGS

FIG. 1 is a block diagram of a wireless communication system to which an embodiment of this application may be applied;
FIG. 2 is a flowchart of a network access method according to an embodiment of this application;
FIG. 3 is a schematic diagram of a dense network;
FIG. 4 is a schematic diagram of an SFN;
FIG. 5 is a structural diagram of a network access apparatus according to an embodiment of this application;
FIG. 6 is a flowchart of another network access method according to an embodiment of this application;
FIG. 7 is a structural diagram of another network access apparatus according to an embodiment of this application;
FIG. 8 is a structural diagram of a communication device according to an embodiment of this application;
FIG. 9 is a diagram of a hardware structure of a network-side device according to an embodiment of this application; and
FIG. 10 is a diagram of a hardware structure of a terminal according to an embodiment of this application.

## DETAILED DESCRIPTION

The technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in this embodiment of this application are often used interchangeably, and the described technologies may be used both for the systems and radio technologies mentioned above and may also be used for other systems and radio technologies. However, the following descriptions describe a new radio (New Radio, NR) system for the objective of being used as an example, and NR terms are used in most of the descriptions below. These technologies may also be applied to applications other than NR system applications, such as a 6th generation (6th Generation, 6G) communication system.

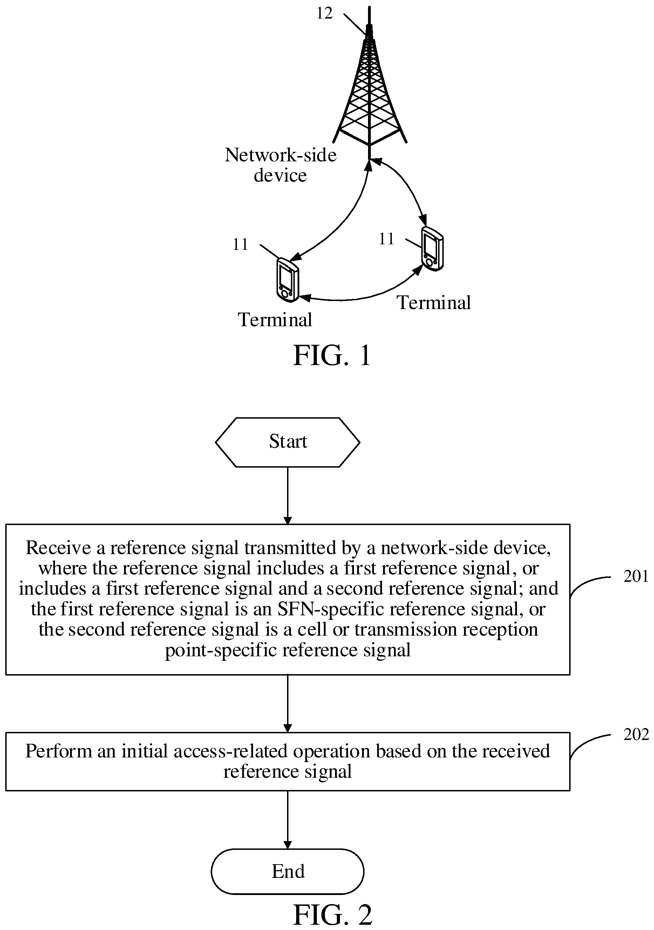

FIG. 1 is a block diagram of a wireless communication system to which an embodiment of this application may be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or vehicle user equipment (VUE), and pedestrian user equipment, (PUE). The wearable device includes: a bracelet, headphones, glasses, or the like. It is to be noted that, in this embodiment of this application, a specific type of the terminal 11 is not limited. The network-side device 12 may be a base station or a core network, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a household node B, a household evolved node B, a WLAN access point, a WiFi node, a transmission reception point (Transmission Reception Point, TRP) or some other proper terms in the field. Provided that the same technical effect is achieved, the base station is not limited to a specific technical vocabulary. It should be noted that, in this embodiment of this application, only a base station in the NR system is used as an example, but a specific type of the base station is not limited.

The network access method, the network access apparatus, the network-side device, and the terminal provided in this embodiment of this application are described in detail below by using specific embodiments and application scenarios with reference to the accompanying drawings.

FIG. 2 is a flowchart of a network access method according to an embodiment of this application. As shown in FIG. 2, the network access method is applied to a terminal, and the method includes the following steps:

Step 201. Receive a reference signal transmitted by a network-side device, where the reference signal includes a first reference signal, or includes a first reference signal and a second reference signal; and the first reference signal is an SFN-specific reference signal, or the second reference signal is a cell or a transmission reception point-specific reference signal.

Step 202. Perform an initial access-related operation based on the received reference signal.

Related introduction on a dense network, mobility in an idle mode or inactive mode, an SFN, and an existing network access process are respectively made below.

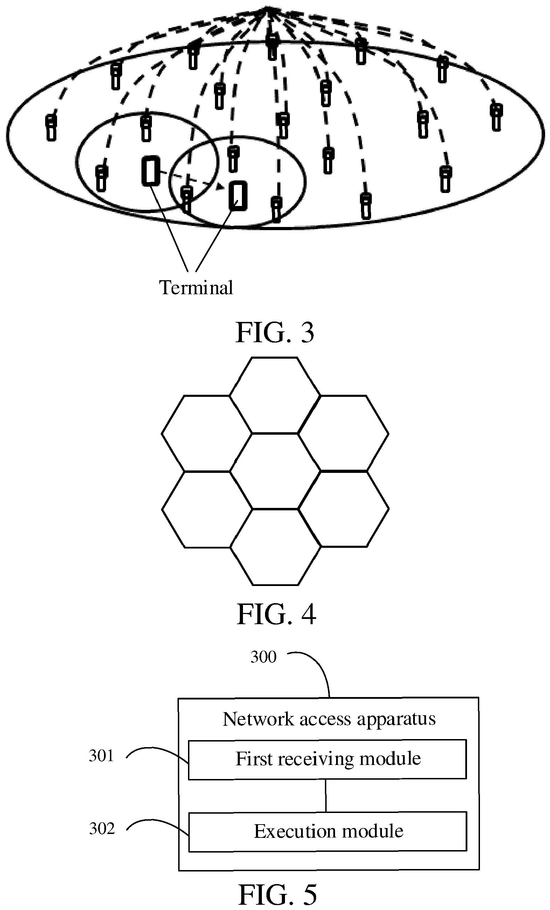

FIG. 3 is a schematic diagram of a terminal moving in a dense network (dense network).

A low-frequency (for example, FR1) cell has a larger coverage than a high-frequency (for example, FR2) cell does. When a terminal moves in an FR1 coverage, an FR2 cell may be continuously replaced, but an FR1 cell is not replaced. When initially activating an FR2 cell or switch the FR2 cell, the terminal needs to continuously measure the signal quality of each beam, and a cell activation time or cell switching time is excessively long due to a relatively large quantity of beams. For example, when a specific condition is met, a measurement time may reach a level of seconds, as follows:

$$8\text{ms} + 24 * T_{rs} + T_{uncertainty,\ MAC} + T_{L1\text{-}RSRP,\ measure} + T_{L1\text{-}RSRP,\ report} + T_{HARQ} + T_{FineTiming}$$

The relatively long measurement time leads to relatively high network overhead and power consumption of the terminal.

During the movement of the terminal in the idle mode or inactive mode, the network provides a priority of each frequency.

For a same-frequency neighboring cell, if a measurement evaluation value of a target (or neighboring) cell (calculated according to a measurement result of the target (or neighboring) cell after adding an offset) is better than a measurement evaluation value of a serving cell (calculated according to a measurement result of the serving cell after adding an offset), and lasts for a period of time (for example, a period of time of network configuration), and the terminal camps on a current serving cell for more than a period of time (for example, 1s specified in a protocol), the terminal reselects to the target (or neighboring) cell.

For a high-priority inter-frequency (that is, inter-frequency) or an inter-technology (that is, inter-RAT) neighboring cell, if the measurement evaluation value of the target (or neighboring) cell exceeds a threshold, and lasts for a period of time (for example, a period of time of network configuration), the terminal reselects to the target (or neighboring) cell.

For a low-priority inter-frequency (that is, inter-frequency) or an inter-technology (that is, inter-RAT) neighboring cell, if the measurement evaluation value of the target (or neighboring) cell is greater than a threshold and the measurement evaluation value of the current serving cell is less than the threshold, and lasts for a period of time (for example, a period of time of network configuration), the terminal reselects to the target (or neighboring) cell.

For an inter-frequency (that is, inter-frequency) or inter-technology (that is, inter-RAT) neighboring cell, when a priority of the target (or neighboring) frequency is the same as a priority of the current serving (or camping) frequency, a method for cell reselection is the same as a method for cell reselection of the same-frequency cell.

A terminal in an idle mode or inactive mode triggers a connection establishment process by receiving a paging message transmitted by the network-side device, so as to transmit and receive data.

To reduce the power consumption of the terminal, cell free (cell free) or the SFN is the main deployment in a dense network or a high-speed scenario. In an SFN transmission solution, a plurality of cells or a plurality of transmission points may transmit the same signal, there is no same-frequency interference between different cells, and a plurality of signals may improve the signal to interference plus noise ratio (Signal to Interference plus Noise Ratio, SINR), transmission quality, and coverage effect. A plurality of cells forming the SFN may share a same cell identifier (cell ID), that is, an ID of a super cell (super cell). A plurality of cells may transmit signals in a manner of SFN transmission. For example, the plurality of cells transmit with wide beams, and the terminal may receive the wide beams transmitted by the plurality of cells at a specific moment, thereby obtaining diversity gain. In the SFN transmission solution, the terminal does not need to frequently perform cell reselection or switching between cells. For example, the terminal does not need to frequently perform handover (handover) in a connected mode (connected mode) between cells, and also does not need to frequently perform cell selection/reselection (cell selection/reselection) in an idle mode (idle mode) or in an inactive mode (inactive mode) between cells. FIG. 4 is an SFN super cell including seven cells.

Currently, the terminal performs network access (or referred to as system access) by using the following basic processes: first, the terminal performs an initial network search, which includes reception of a reference signal, and completes cell selection or reselection according to measurement on the reference signal, and then camps on a corresponding cell. Next, the terminal receives broadcast system information (System Information, SI), which includes information required for accessing a system. Finally, random access is performed according to the obtained information required for accessing the system, so as to implement radio resource control (Radio Resource Control, RRC) connection to the network-side device.

Although in the SFN transmission solution, the terminal does not need to frequently perform cell selection, reselection, or switching between cells, if the terminal still performs network access according to an existing network access manner, the terminal still needs to receive a cell-specific reference signal between different cells or transmission reception points in an SFN range. In this way, the terminal still needs to perform relatively more measurements, and there is still relatively high network overhead and relatively high power consumption of the terminal.

In view of this, to resolve the foregoing problems existing in the existing network access, in this embodiment of this application, the reference signal transmitted by the network-side device to the terminal includes at least the first reference signal, and the first reference signal is an SFN-specific reference signal. In the SFN range, related configuration of the reference signal of each cell is the same as related configuration of the first reference signal. In this way, when moving between different cells or transmission reception points in the SFN range, the terminal no longer needs to receive the cell-specific reference signal, thereby reducing a frequency of terminal measurement, and reducing network overhead and power consumption of the terminal.

In addition to the first reference signal, the reference signal transmitted by the network-side device to the terminal may further include a second reference signal, that is, the cell or the transmission reception point-specific reference signal.

The cell or transmission reception point refers to a cell or transmission reception point in the SFN or super cell range.

The terms "SFN-specific" and "cell or transmission reception point-specific" involved in this embodiment of this application are respectively explained as follows:

SFN-specific (SFN/super cell-specific), that is, related configuration corresponding to each SFN or super cell is independent, and the configuration in the SFN range or the super cell range is the same.

Cell/TRP-specific (Cell/TRP-specific), that is, related configuration corresponding to each cell or transmission reception point is independent, and the configuration in a range of the cell or transmission reception point is the same.

In this embodiment of this application, in the idle mode or inactive mode, the terminal may receive the reference signal transmitted by the network-side device. After receiving the reference signal transmitted by the network-side device, the terminal may perform an initial access-related operation based on the reference signal, and the related technical solution for the initial access-related operation will be described subsequently.

In this embodiment of this application, a system design deployed through the SFN provides a technical solution for the terminal to perform network access based on an SFN-specific reference signal, so that the terminal may successfully access the SFN. Because the terminal does not need to frequently perform cell selection, reselection, or switching between cells in an SFN range, and a measurement frequency of the terminal is reduced, network overhead and power consumption of the terminal may be reduced, which is suitable for a dense network or a high-speed scenario.

It is to be noted that, the successfully accessing the network in this application includes camping on a corresponding cell through cell selection or reselection (that is, an idle mode or an inactive mode), or establishing a connection to a network-side device through an RRC connection (that is, an RRC connected mode).

Optionally, the reference signal includes at least one of a synchronization signal block (Synchronization Signal Block, SSB), a CSI reference signal (CSI Reference Signal, CSI-RS), a cell-specific reference signal (Cell-specific Reference Signals, CRS), a sounding reference signal (Sounding Reference Signal, SRS), or a demodulation reference signal (Demodulation Reference Signal, DMRS).

In this embodiment of this application, using the reference signal including the SSB as an example, the reference signal may include a cell/TRP-specific SSB and an SFN-specific SSB, or only include an SFN-specific SSB. For the cell/TRP-specific SSB, the related configuration of the SSB of each cell/TRP is independent, and for the SFN-specific SSB, the related configuration of the SSB of all cells/TRPs in the SFN range is the same. The related configuration of the SSB may include an SSB sequence (sequence), an SSB index (index), an SS/PBCH block measurement timing configuration (SS/PBCH block Measurement Timing Configuration, SMTC), or the like.

Optionally, the performing an initial access-related operation based on the received reference signal includes at least one of the following:

performing cell selection or reselection;
receiving system information transmitted by the network-side device;
receiving a paging message transmitted by the network-side device;
receiving advance indication information transmitted by the network-side device; or
initiating random access to the network-side device.

The system information (System Information, SI) may include a master information block (Master Information Block, MIB) and a system information block (System Information Block, SIB).

The advance indication information may include messages such as a wake-up signal (Wake-up signal, WUS), a go-to-sleep signal (Go-to-sleep signal, GTS), a signal of downlink control information scrambled by PS-RNTI (DCI with CRC scrambled by PS-RNTI, DCP), a paging indication (paging indication), or the like.

The random access is random access channel (Random Access Channel, RACH) random access.

In this implementation, when the terminal receives the paging (paging) message transmitted by the network-side device, it may be understood that, the terminal monitors the paging message transmitted by the network-side device. When the terminal receives the advance indication information transmitted by the network-side device, it may be understood that, the terminal monitors the advance indication information transmitted by the network-side device.

Optionally, the performing cell selection or reselection includes:

measuring the reference signal;
performing cell selection or reselection according to a measurement result; and
camping on, by the terminal, a first cell or a second cell according to a result of the cell selection or reselection, where the first cell is an SFN-specific cell, or the second cell is a cell or transmission reception point-specific cell or transmission reception point.

In this implementation, the terminal may measure the reference signal in the idle mode or inactive mode. For example, the terminal may measure a cell/TRP-specific SSB and an SFN specific-SSB, or only measure an SFN-specific SSB. The terminal may perform cell selection or reselection according to a measurement result, and camp on a cell selected or reselected by the terminal according to a result of the cell selection or reselection.

The measurement result may include at least one of the following: a reference signal received power (Reference Signal Received Power, RSRP), reference signal received quality (Reference Signal Received Quality, RSRQ), SINR, block error rate (Block Error Rate, BLER), or a received signal strength indication (Received Signal Strength Indication, RSSI).

A cell on which the terminal camps may be an SFN-specific cell, and may also be a cell or transmission reception point-specific cell or transmission reception point. The cell or transmission reception point-specific cell or transmission reception point may be a cell-specific cell, a cell-specific transmission reception point, a transmission reception point-specific cell, or a transmission reception point-specific transmission reception point, which is not limited in this application.

Optionally, the terminal receives the system information transmitted by the network-side device at a layer on which the terminal camps; or

the terminal receives the paging message transmitted by the network-side device at a layer on which the terminal camps; or

the terminal receives the advance indication information transmitted by the network-side device at a layer on which the terminal camps; or

the terminal initiates the random access to the network-side device at a layer on which the terminal camps, where the layer on which the terminal camps is a first layer in a case that the terminal camps on the first cell; or the layer on which the terminal camps is a second layer in a case that the terminal camps on the second cell, where the first layer is an SFN layer, and the second layer is a cell layer or a transmission reception point layer.

In this implementation, after camping on a cell, the terminal may receive related information and initiate random access at a layer on which the terminal camps.

Specifically, if the terminal camps (camp) on an SFN layer (SFN layer), the terminal may perform at least one of the following operations:

receiving a paging message at the SFN layer;
receiving a system message at the SFN layer; or
initiating random access at the SFN layer.

If the terminal camps on a cell layer or a transmission reception point layer (cell/TRP layer), the terminal may perform at least one of the following operations:

receiving a paging message at the cell layer or the transmission reception point layer;
receiving a system message at the cell layer or the transmission reception point layer; or
initiating random access at the cell layer or the transmission reception point layer.

It is to be noted that, in actual deployment, the SFN is a scope of a super cell, which includes several cells or TRPs. An SFN super cell is usually referred to as an SFN layer. A cell corresponding to the super cell or the SFN layer is an SFN-specific (specific) cell; and several cells or TRPs included in an SFN range are cell/TRP layers. The cell/TRP corresponding to the layer is the cell/TRP-specific (specific) cell or TRP. Correspondingly, a reference signal RS, a system message SI, a paging message Paging, or the like at the SFN layer are all referred to as SFN-specific RS, SI, paging, or the like. A reference signal RS, a system message SI, a paging message Paging, or the like at the cell/TRP layer are all referred to as cell/TRP-specific RS, SI, paging, or the like.

Optionally, after the terminal successfully accesses a network, the method further includes:
receiving a third reference signal transmitted by the network-side device, where the third reference signal is a cell or transmission reception point-specific reference signal.

The third reference signal may be the same as or different from the second reference signal.

In this implementation, after the random access is completed, and after the terminal successfully accesses the network, the terminal may further receive a cell or transmission reception point-specific reference signal transmitted by the network-side device. The successfully accessing, by the terminal, the network may include successful connection in the connected mode, or successful camping in the idle mode or inactive mode.

In this way, the receiving, by the terminal, the reference signal transmitted by the network-side device may include the following cases:

first, before performing an initial access-related operation, the terminal may receive the first reference signal transmitted by the network-side device, and after successfully accessing the network, the terminal may further receive the third reference signal transmitted by the network-side device; and

second, before performing an initial access-related operation, the terminal may receive the first reference signal transmitted by the network-side device, or the first reference signal and the second reference signal, and after successfully accessing the network, the terminal may further receive the third reference signal transmitted by the network-side device. That is, before the initial access-related operation, even if the terminal has received the SFN-specific reference signal, or the SFN-specific reference signal and the cell or transmission reception point-specific reference signal, after cell selection or reselection, the terminal may further receive the cell or transmission reception point-specific reference signal.

The third reference signal may be, for example, the cell/TRP-specific SSB, and certainly may further be other reference signals, such as various reference signals such as a CSI-RS, a CRS, an SRS, and a DMRS.

Optionally, the third reference signal is transmitted through an SFN-specific system message, or through a cell or transmission reception point-specific system message, or through dedicated RRC information, or through a message 2 or a message 4 (msg. 2/4 during RACH) in a random access process.

The dedicated RRC information may be RRC indication information (RRC dedicated signaling), such as RRC configuration/reconfiguration with sync/HO command, or the like.

Optionally, at least one of the paging message or the system message is SFN-specific.

In addition, both the paging message and the system message may be cell or transmission reception point-specific. That is, the paging message is cell or transmission reception point-specific, and the system message is also cell or transmission reception point-specific.

Optionally, the paging message and the system message are SFN-specific; or

the paging message is SFN-specific, and the system message is cell or transmission reception point-specific; or
the paging message is cell or transmission reception point-specific, and the system message is SFN-specific; or
the paging message includes an SFN-specific paging message and a cell or transmission reception point-specific paging message; or
the system message includes an SFN-specific system message and a cell or transmission reception point-specific system message.

Optionally, the initiating random access to the network-side device includes:
in a case that the system message indicates that there is an SFN-specific random access resource, initiating, by the terminal, the random access to the network-side device by using the random access resource.

In addition, when the system message indicates that there is a cell or transmission reception point-specific random access resource, the terminal may perform RACH access by using the cell or transmission reception point-specific random access resource.

The random access resource may also be understood as an initial access resource, which may include at least one of the following:

an SSB, that is, there are a plurality of periodic transmissions for the SSB;
an SMTC, that is, there are a plurality of configurations for the SMTC;
a search space (Search space), such as a common search space, that is a configuration with a plurality of search spaces;
a control resource set (Control resource set, CORESET), such as coreset#0, that is, there are a plurality of configurations for the CORESET;
a bandwidth part (Bandwidth Part, BWP), such as an initial BWP, including a DL initial BWP and/or a UL initial BWP, that is, a configuration with a plurality of initial BWPs; or
a reference signal (Reference Signal, RS), that is, a configuration with a plurality of reference signals.

Optionally, a resource of the first reference signal and a resource of the second reference signal are independent of each other; or
a resource of the first reference signal is a subset of a resource of the second reference signal.

As an example, a resource of the SFN-specific SSB and a resource of the cell/TRP-specific SSB in the SFN range may be independent of each other. The resource of the SFN-specific SSB may also be a subset of the cell/TRP-specific SSB in the SFN range. For example, a specific cell/TRP SSB index is used as an SFN SSB index.

Optionally, the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

In this implementation, the first reference signal and the second reference signal may be respectively mapped on different time domain resources, that is, time division multiplexing (Time Division Multiplexing, TDM). For example, the first reference signal and the second reference signal use different SMTCs. The first reference signal and the second reference signal may also be respectively mapped on different code domain resources, that is, code division multiplexing (Code Division Multiplexing, CDM). For example, the first reference signal and the second reference signal use different sequences (Sequence). The first reference signal and the second reference signal may further be respectively mapped on different frequency domain resources, that is, frequency division multiplexing (Frequency Division Multiplexing, FDM). For example, the first reference signal and the second reference signal use different synchronization rasters (Sync Raster or sync raster).

Optionally, the terminal identifies the first reference signal by using at least one of a reference signal identifier, a physical cell identifier (Physical Cell Identifier, PCI), frequency domain configuration information, time domain configuration information, or code domain configuration information.

Using the first reference signal as the SFN-specific SSB and the second reference signal as the cell/TRP-specific SSB as an example:

the SFN-specific SSB and the cell/TRP-specific SSB may use different SSB IDs, and therefore, the terminal may identify the SFN-specific SSB by using the SSB ID;
the SFN-specific SSB and the cell/TRP-specific SSB may also use different PCIs, and therefore, the terminal may also identify the SFN-specific SSB by using the PCI;
the SFN-specific SSB and the cell/TRP-specific SSB may also use different frequency bands, and therefore, the terminal may also identify the SFN-specific SSB by using frequency domain configuration information;
the SFN-specific SSB and the cell/TRP-specific SSB may also use different time domain configurations, such as different SMTCs, and therefore, the terminal may also identify the SFN-specific SSB by using time domain configuration information; and
the SFN-specific SSB and the cell/TRP-specific SSB may further use different code domains, such as different sequences, and therefore, the terminal may further identify the SFN-specific SSB by using code domain configuration information.

Optionally, a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, where
the first physical cell identifier is an SFN-specific physical cell identifier, or the second physical cell identifier is a physical cell identifier of the cell or transmission reception point-specific cell or transmission reception point. The first physical cell identifier and the second physical cell identifier are respectively physical cell identifiers corresponding to the first reference signal and the second reference signal.

The first physical cell identifier may also be understood as a PCI ID corresponding to the SFN layer, and an SFN layer PCI ID may be the same as a current cell/TRP PCI ID, or may be different from a current cell/TRP PCI ID. For the latter case, the terminal may determine a cell/TRP range in which the terminal is located by using the SFN layer PCI ID and the cell/TRP PCI ID, which may be applied to operations such as measurement, switching, cell selection or reselection, RRC connection establishment, RRC connection re-establishment, and resumption (resume) of the inactive mode.

Optionally, the first physical cell identifier is transmitted to the terminal by the network-side device through the system message.

Optionally, the first physical cell identifier is different from the second physical cell identifier in a case that the SFN-specific cell and the cell or transmission reception point-specific cell are deployed on a same frequency (that is, intra-frequency); or
the first physical cell identifier is the same as or different from the second physical cell identifier in a case that the SFN-specific cell and the cell or transmission reception point-specific cell are deployed on different frequencies (that is, inter-frequency).

The same frequency may refer to the same frequency or the same frequency band or the same carrier, and different frequencies may refer to different frequencies or different frequency bands or different carriers.

An SFN-specific cell may be understood as a cell corresponding to the SFN layer (or a super cell), and a cell or transmission reception point-specific cell may be understood as a cell corresponding to the cell/TRP layer. The frequency may be a frequency band, a frequency point, or a carrier. For a deployment scenario of the SFN layer, there are the following cases:

first, when the SFN layer and the cell/TRP layer are deployed on the same frequency band, frequency, or carrier, different PCI IDs may be used for distinguishing the SFN layer and the cell/TRP layer; and
second, when the SFN layer and the cell/TRP layer are deployed on different frequency bands, frequencies, or carriers, the SFN layer may use the same or different PCI IDs as the cell/TRP layer.

Optionally, in a case that a network is deployed with a high frequency range and a low frequency range, the SFN-specific cell includes a cell in the low frequency range, and the cell or transmission reception point-specific cell includes a cell in the high frequency range; or
in a case that a network includes a satellite communication network, the SFN-specific cell includes a high altitude platform station (High Altitude Platform Station, HAPS) cell or a high-orbit satellite cell, and the cell or transmission reception point-specific cell includes a low-orbit satellite cell or a cell covered by a ground base station.

A high-frequency range may also be referred to as a high-frequency layer (high-frequency layer), and a low-frequency range may also be referred to as a low-frequency layer (low-frequency layer). When the network is deployed with the high-frequency range and the low-frequency range, the cell/TRP corresponding to the low-frequency range may be used as an SFN or a super cell, and the cell/TRP corresponding to the high-frequency range may be used as the cell/TRP in the SFN/super cell.

For the satellite communication network, the HAPS/satellite cell may be used as the SFN or super cell, and the low-orbit satellite in the range may be used as the cell/TRP in the SFN/super cell, or other ordinary cells/TRPs in the range may be used as cells/TRPs in the SFN/super cell.

Optionally, before the receiving a paging message transmitted by the network-side device, the method further includes at least one of the following:

transmitting an uplink signal (UL signal) to the network-side device, where the uplink signal is used for indicating an identifier of the terminal or an identifier of a group in which the terminal is located; or
receiving an advance indication signal transmitted by the network-side device, where the advance indication signal includes at least one of a WUS, a GTS, DCP, or a pre-indication (pre-indication), and the advance indication signal is used for indicating that whether the terminal receives the paging message and/or a physical downlink control channel (Physical downlink control channel, PDCCH) corresponding to the paging message in several subsequent discontinuous reception (Discontinuous Reception, DRX) periods, or is used for indicating that whether there is a paging message of the terminal or a group to which the terminal belongs.

The uplink signal may be, for example, an RACH or a paging indication (Paging indication). An objective of the message is to assist the network-side device to confirm a paging range in which the terminal or a group of the terminal is located.

Optionally, after the transmitting an uplink signal to the network-side device, the method further includes:

receiving a response message (UL signaling Response) transmitted by the network-side device, where the response message is used for indicating at least one of the following:
that the network-side device receives a feedback of the uplink signal; or
that whether there is the paging message of the terminal or the paging message of the group in which the terminal is located.

Optionally, the response message carries at least one of the advance indication signal or indication information, where the indication information is used for indicating information about a transmission reception point that receives the paging message.

Optionally, the advance indication signal is SFN-specific, or cell or transmission reception point-specific; or the response message is SFN-specific, or cell or transmission reception point-specific.

For example, a WUS message may be cell/TRP-specific or SFN-specific, and the UL signaling response may be cell/TRP-specific or SFN-specific.

The signaling process includes at least one of the following cases:

Case 1:

Step 1. A terminal transmits an uplink signal to a network-side device.
Step 2. The terminal receives a paging message transmitted by the network-side device.

Case 2:

Step 1. The terminal receives an advance indication signal transmitted by the network-side device.
Step 2. A terminal transmits an uplink signal to a network-side device.
Step 3. The terminal receives a paging message transmitted by the network-side device.

Case 3:

Step 1. A terminal transmits an uplink signal to a network-side device.
Step 2. The terminal receives a response message transmitted by the network-side device, and the response message may carry the advance indication signal.

Step 3. The terminal receives a paging message transmitted by the network-side device.

Optionally, the method further includes:
obtaining SFN-related configuration information, where the SFN-related configuration information includes at least one of the SFN-specific reference signal, SFN-specific system information, the SFN-specific paging message, or an SFN random access channel.

The SFN-specific reference signal may be, for example, the SFN-specific SSB.

Optionally, the terminal obtains the SFN-related configuration information through at least one of system broadcast, an RRC dedicated message, or the paging message.

The system broadcast may be, for example, MIB, SIB, or the like. The paging message may be, for example, a paging RNTI (Paging RNTI, P-RNTI) PDCCH and/or a physical downlink shared channel (Physical downlink shared channel, PDSCH) paging message.

After an RRC connection is established, the network-side device may notify the terminal through the RRC dedicated message, such as an RRC release message and an RRC suspend message. Further, when the terminal is released from the cell/TRP-specific cell, or is released from the SFN layer, the network-side device may notify the terminal through the RRC dedicated message.

In addition, for a terminal that does not support an SFN, the terminal uses the SFN-specific cell as an access-barring (bar) cell, that is, the terminal is barred from accessing the SFN-specific cell.

It is to be noted that, in the network access method provided in this embodiment of this application, the execution entity may be a network access apparatus, or a control module configured to perform the network access method in the network access apparatus. In this embodiment of this application, the network access apparatus performing the network access method is used as an example to describe the network access apparatus provided in this embodiment of this application.

FIG. 5 is a structural diagram of a network access apparatus according to an embodiment of this application. As shown in FIG. 5, a network access apparatus 300 includes:

a first receiving module 301, configured to receive a reference signal transmitted by a network-side device, where the reference signal includes a first reference signal, or includes a first reference signal and a second reference signal; and the first reference signal is a single-frequency network SFN-specific reference signal, or the second reference signal is a cell or transmission reception point-specific reference signal; and

an execution module 302, configured to perform an initial access-related operation based on the received reference signal.

Optionally, the execution module 302 is configured to execute at least one of the following:

performing cell selection or reselection;
receiving system information transmitted by the network-side device;
receiving a paging message transmitted by the network-side device;
receiving advance indication information transmitted by the network-side device; or
initiating random access to the network-side device.

Optionally, the execution module 302 includes:

a measurement submodule, configured to measure the reference signal;
a selection submodule, configured to perform cell selection or reselection according to a measurement result; and
a camping submodule, configured to cause the terminal to camp on a first cell or a second cell according to a result of the cell selection or reselection, where the first cell is an SFN-specific cell, or the second cell is a cell or transmission reception point-specific cell or transmission reception point.

Optionally, the execution module 302 is further configured to:

receive the system information transmitted by the network-side device at a layer on which the terminal camps; or
receive the paging message transmitted by the network-side device at a layer on which the terminal camps; or
receive the advance indication information transmitted by the network-side device at a layer on which the terminal camps; or
initiate the random access to the network-side device at a layer on which the terminal camps, where
the layer on which the terminal camps is a first layer in a case that the terminal camps on the first cell; or the layer on which the terminal camps is a second layer in a case that the terminal camps on the second cell, where the first layer is an SFN layer, and the second layer is a cell layer or a transmission reception point layer.

Optionally, the network access apparatus 300 further includes:
a second receiving module, configured to receive a third reference signal transmitted by the network-side device after the terminal successfully accesses a network, where the third reference signal is a cell or transmission reception point-specific reference signal.

Optionally, the third reference signal is transmitted through an SFN-specific system message, or through a cell or transmission reception point-specific system message, or through dedicated RRC information, or through a message 2 or a message 4 in a random access process.

Optionally, at least one of the paging message or the system message is SFN-specific.

Optionally, the paging message and the system message are SFN-specific; or

the paging message is SFN-specific, and the system message is cell or transmission reception point-specific; or
the paging message is cell or transmission reception point-specific, and the system message is SFN-specific; or
the paging message includes an SFN-specific paging message and a cell or transmission reception point-specific paging message; or
the system message includes an SFN-specific system message and a cell or transmission reception point-specific system message.

Optionally, the execution module 302 includes:
a random access submodule, configured to, in a case that the system message indicates that there is an SFN-specific random access resource, cause the terminal to initiate the random access to the network-side device by using the random access resource.

Optionally, a resource of the first reference signal and a resource of the second reference signal are independent of each other; or
a resource of the first reference signal is a subset of a resource of the second reference signal.

Optionally, the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

Optionally, the terminal identifies the first reference signal by using at least one of a reference signal identifier, a physical cell identifier, frequency domain configuration information, time domain configuration information, or code domain configuration information.

Optionally, a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, where
the first physical cell identifier is an SFN-specific physical cell identifier, or the second physical cell identifier is a physical cell identifier of the cell or transmission reception point-specific cell or transmission reception point.

Optionally, the first physical cell identifier is transmitted to the terminal by the network-side device through the system message.

Optionally, the first physical cell identifier is different from the second physical cell identifier in a case that the SFN-specific cell and the cell or transmission reception point-specific cell are deployed on a same frequency; or
the first physical cell identifier is the same as or different from the second physical cell identifier in a case that the SFN-specific cell and the cell or transmission reception point-specific cell are deployed on different frequencies.

Optionally, in a case that a network is deployed with a high frequency range and a low frequency range, the SFN-specific cell includes a cell in the low frequency range, and the cell or transmission reception point-specific cell includes a cell in the high frequency range; or
in a case that a network includes a satellite communication network, the SFN-specific cell includes a high altitude platform station cell or a high-orbit satellite cell, and the cell or transmission reception point-specific cell includes a low-orbit satellite cell or a cell covered by a ground base station.

Optionally, the network access apparatus 300 further includes at least one of the following:

a transmitting module, configured to transmit an uplink signal to the network-side device, where the uplink signal is used for indicating an identifier of the terminal or an identifier of a group in which the terminal is located; or
a third receiving module, configured to receive an advance indication signal transmitted by the network-side device, where the advance indication signal includes at least one of a wake-up signal WUS, a go-to-sleep signal GTS, DCP, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

Optionally, the network access apparatus 300 further includes:
a fourth receiving module, configured to receive a response message transmitted by the network-side device, where the response message is used for indicating at least one of the following:

that the network-side device receives a feedback of the uplink signal; or
that whether there is the paging message of the terminal or the paging message of the group in which the terminal is located.

Optionally, the response message carries at least one of the advance indication signal or indication information, where the indication information is used for indicating information about a transmission reception point that receives the paging message.
Optionally, the advance indication signal is SFN-specific, or cell or transmission reception point-specific; or the response message is SFN-specific, or cell or transmission reception point-specific.
Optionally, the reference signal includes at least one of a synchronization signal block SSB, a CSI reference signal CSI-RS, a cell reference signal CRS, a sounding reference signal SRS, or a demodulation reference signal DMRS.
Optionally, the network access apparatus 300 further includes:
an obtaining module, configured to obtain SFN-related configuration information, where the SFN-related configuration information includes at least one of the SFN-specific reference signal, SFN-specific system information, the SFN-specific paging message, or an SFN random access channel.
Optionally, the terminal obtains the SFN-related configuration information through at least one of system broadcast, an RRC dedicated message, or the paging message.
Optionally, the network access apparatus 300 further includes:
an access barring module, configured to regard, by the terminal, an SFN-specific cell as a cell that is barred from being accessed in a case that the terminal does not support an SFN.
The network access apparatus in this embodiment of this application may be an apparatus, and may also be a component in a terminal, an integrated circuit, or a chip. The apparatus may be a mobile terminal, or may be a non-mobile terminal. For example, the mobile terminal may include, but is not limited to, a type of the terminal 11 listed above, and a non-mobile terminal may be a server, a network attached storage (Network Attached Storage, NAS), a personal computer (personal computer, PC), a television (television, TV), a cash machine, a self-service machine, or the like, which is not specifically limited in this embodiment of this application.
The network access apparatus in this embodiment of this application may be an apparatus having an operating system. The operating system may be an Android (Android) operating system, may be an iOS operating system, and may further be another possible operating system, which is not specifically limited in this embodiment of this application.
The network access apparatus provided in this embodiment of this application may implement various processes of the method embodiment in FIG. 2, and implement the same technical effect, which will not be described in detail herein again to avoid repetition.
In this embodiment of this application, a system design deployed through the SFN provides a technical solution for the terminal to perform network access based on an SFN-specific reference signal, so that the terminal may successfully access the SFN. Because the terminal does not need to frequently perform cell selection, reselection, or switching between cells in an SFN range, and a measurement frequency of the terminal is reduced, network overhead and power consumption of the terminal may be reduced.

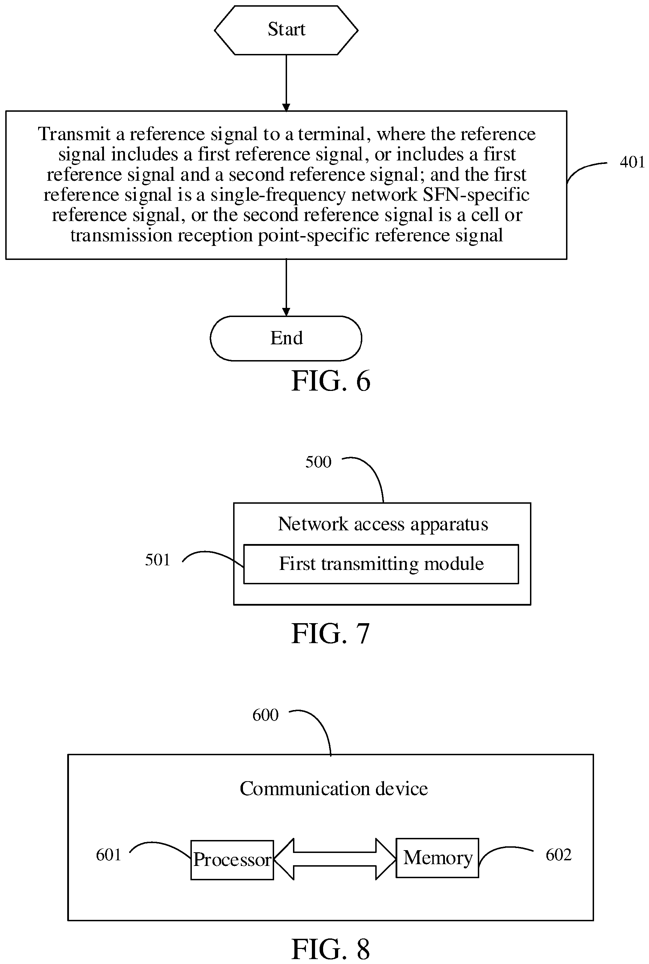

FIG. 6 is a flowchart of a network access method according to an embodiment of this application. As shown in FIG. 6, the network access method is applied to a network-side device, and the method includes the following steps:
Step 401. Transmit a reference signal to a terminal, where the reference signal includes a first reference signal, or includes a first reference signal and a second reference signal; and the first reference signal is a single-frequency network SFN-specific reference signal, or the second reference signal is a cell or transmission reception point-specific reference signal.

In this embodiment of this application, a system design deployed through the SFN provides a technical solution in which the SFN-specific reference signal is transmitted to the terminal. Therefore, the terminal may perform network access based on the SFN-specific reference signal, so that the terminal may successfully access the SFN. Because the terminal does not need to frequently perform cell selection, reselection, or switching between cells in an SFN range, and a measurement frequency of the terminal is reduced, network overhead and power consumption of the terminal may be reduced.

Optionally, in a case that the terminal camps on a cell, the method further includes:

transmitting system information to the terminal at a layer on which the terminal camps; or
transmitting a paging message to the terminal at a layer on which the terminal camps; or
transmitting advance indication information to the terminal at a layer on which the terminal camps, where
the layer on which the terminal camps is a first layer in a case that the terminal camps on a first cell; or the layer on which the terminal camps is a second layer in a case that the terminal camps on a second cell, where the first cell is an SFN-specific cell, and the first layer is an SFN layer, or the second cell is a cell or transmission reception point-specific cell or transmission reception point, and the second layer is a cell layer or a transmission reception point layer.

Optionally, after the terminal successfully accesses a network, the method further includes:
transmitting a third reference signal to the terminal, where the third reference signal is a cell or transmission reception point-specific reference signal.

Optionally, the third reference signal is transmitted through an SFN-specific system message, or through a cell or transmission reception point-specific system message, or through dedicated RRC information, or through a message 2 or a message 4 in a random access process.

Optionally, at least one of the paging message or the system message is SFN-specific.

Optionally, the paging message and the system message are SFN-specific; or

the paging message is SFN-specific, and the system message is cell or transmission reception point-specific; or
the paging message is cell or transmission reception point-specific, and the system message is SFN-specific; or
the paging message includes an SFN-specific paging message and a cell or transmission reception point-specific paging message; or
the system message includes an SFN-specific system message and a cell or transmission reception point-specific system message.

Optionally, a resource of the first reference signal and a resource of the second reference signal are independent of each other; or
a resource of the first reference signal is a subset of a resource of the second reference signal.

Optionally, the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

Optionally, the terminal identifies the first reference signal by using at least one of a reference signal identifier, a physical cell identifier, frequency domain configuration information, time domain configuration information, or code domain configuration information.

Optionally, a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, where
the first physical cell identifier is an SFN-specific physical cell identifier, or the second physical cell identifier is a physical cell identifier of the cell or transmission reception point-specific cell or transmission reception point.

Optionally, the first physical cell identifier is transmitted to the terminal by the network-side device through the system message.

Optionally, the first physical cell identifier is different from the second physical cell identifier in a case that the SFN-specific cell and the cell or transmission reception point-specific cell are deployed on a same frequency; or

the first physical cell identifier is the same as or different from the second physical cell identifier in a case that the SFN-specific cell and the cell or transmission reception point-specific cell are deployed on different frequencies.

Optionally, in a case that a network is deployed with a high frequency range and a low frequency range, the SFN-specific cell includes a cell in the low frequency range, and the cell or transmission reception point-specific cell includes a cell in the high frequency range; or

in a case that a network includes a satellite communication network, the SFN-specific cell includes a high altitude platform station cell or a high-orbit satellite cell, and the cell or transmission reception point-specific cell includes a low-orbit satellite cell or a cell covered by a ground base station.

Optionally, before the transmitting a paging message to the terminal, the method further includes at least one of the following:

receiving an uplink signal transmitted by the terminal, where the uplink signal is used for indicating an identifier of the terminal or an identifier of a group in which the terminal is located; or

transmitting an advance indication signal to the terminal, where the advance indication signal includes at least one of a wake-up signal WUS, a go-to-sleep signal GTS, DCP, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

Optionally, after the receiving an uplink signal transmitted by the terminal, the method further includes:

transmitting a response message to the terminal, where the response message is used for indicating at least one of the following:

that the network-side device receives a feedback of the uplink signal; or

that whether there is the paging message of the terminal or the paging message of the group in which the terminal is located.

Optionally, the response message carries at least one of the advance indication signal or indication information, where the indication information is used for indicating information about a transmission reception point that receives the paging message.

Optionally, the advance indication signal is SFN-specific, or cell or transmission reception point-specific; or the response message is SFN-specific, or cell or transmission reception point-specific.

Optionally, the reference signal includes at least one of a synchronization signal block SSB, a CSI reference signal CSI-RS, a cell reference signal CRS, a sounding reference signal SRS, or a demodulation reference signal DMRS.

Optionally, the method further includes:

transmitting SFN-related configuration information to the terminal, where the SFN-related configuration information includes at least one of the SFN-specific reference signal, SFN-specific system information, the SFN-specific paging message, or an SFN random access channel.

Optionally, the network-side device transmits the SFN-related configuration information to the terminal through at least one of system broadcast, an RRC dedicated message, or the paging message.

Optionally, the method further includes:

barring the terminal from accessing an SFN-specific cell in a case that the terminal does not support an SFN.

It is to be noted that, related implementations and related descriptions in the method embodiment in FIG. 2 may all be applied to this embodiment of this application, and implement the same technical effect. To avoid repetition, details are not repeated herein.

In the network access method provided in this embodiment of this application, the execution entity may be a network access apparatus, or a control module configured to perform the network access method in the network access apparatus. In this embodiment of this application, the network access apparatus performing the network access method is used as an example to describe the network access apparatus provided in this embodiment of this application.

FIG. 7 is a structural diagram of a network access apparatus according to an embodiment of this application. As shown in FIG. 7, a network access apparatus 500 includes:

a first transmitting module 501, configured to transmit a reference signal to a terminal, where the reference signal includes a first reference signal, or includes a first reference signal and a second reference signal; and the first reference signal is a single-frequency network SFN-specific reference signal, or the second reference signal is a cell or transmission reception point-specific reference signal.

Optionally, the network access apparatus 500 further includes a second transmitting module, configured to:

transmit system information to the terminal at a layer on which the terminal camps; or
transmit a paging message to the terminal at a layer on which the terminal camps; or
transmit advance indication information to the terminal at a layer on which the terminal camps, where
the layer on which the terminal camps is a first layer in a case that the terminal camps on the first cell; or the layer
on which the terminal camps is a second layer in a case that the terminal camps on the second cell, where the first
layer is an SFN layer, and the second layer is a cell layer or a transmission reception point layer.

Optionally, the network access apparatus 500 further includes:
a third transmitting module, configured to transmit a third reference signal to the terminal after the terminal successfully
accesses a network, where the third reference signal is a cell or transmission reception point-specific reference signal.

Optionally, the third reference signal is transmitted through an SFN-specific system message, or through a cell
or transmission reception point-specific system message, or through dedicated RRC information, or through a message
2 or a message 4 in a random access process.

Optionally, at least one of the paging message or the system message is SFN-specific.

Optionally, the paging message and the system message are SFN-specific; or

the paging message is SFN-specific, and the system message is cell or transmission reception point-specific; or
the paging message is cell or transmission reception point-specific, and the system message is SFN-specific; or
the paging message includes an SFN-specific paging message and a cell or transmission reception point-specific
paging message; or
the system message includes an SFN-specific system message and a cell or transmission reception point-specific
system message.

Optionally, a resource of the first reference signal and a resource of the second reference signal are independent
of each other; or
a resource of the first reference signal is a subset of a resource of the second reference signal.

Optionally, the first reference signal and the second reference signal have at least one of the following relations:

that the first reference signal and the second reference signal are respectively mapped on different time domain
resources;
that the first reference signal and the second reference signal are respectively mapped on different code domain
resources; or
that the first reference signal and the second reference signal are respectively mapped on different frequency domain
resources.

Optionally, the terminal identifies the first reference signal by using at least one of a reference signal identifier,
a physical cell identifier, frequency domain configuration information, time domain configuration information, or code
domain configuration information.

Optionally, a first physical cell identifier is the same as a second physical cell identifier; or

a first physical cell identifier and a second physical cell identifier are independent of each other, and at least one of
the first physical cell identifier or the second physical cell identifier is used for the terminal to identify a cell on which
or a transmission reception point at which the terminal is located, where
the first physical cell identifier is an SFN-specific physical cell identifier, or the second physical cell identifier is a
physical cell identifier of the cell or transmission reception point-specific cell or transmission reception point.

Optionally, the first physical cell identifier is transmitted to the terminal by the network-side device through the
system message.

Optionally, the first physical cell identifier is different from the second physical cell identifier in a case that the
SFN-specific cell and the cell or transmission reception point-specific cell are deployed on a same frequency; or
the first physical cell identifier is the same as or different from the second physical cell identifier in a case that the SFN-
specific cell and the cell or transmission reception point-specific cell are deployed on different frequencies.

Optionally, in a case that a network is deployed with a high frequency range and a low frequency range, the
SFN-specific cell includes a cell in the low frequency range, and the cell or transmission reception point-specific cell
includes a cell in the high frequency range; or
in a case that a network includes a satellite communication network, the SFN-specific cell includes a high altitude platform
station cell or a high-orbit satellite cell, and the cell or transmission reception point-specific cell includes a low-orbit
satellite cell or a cell covered by a ground base station.

Optionally, the network access apparatus 500 further includes at least one of the following:

a receiving module, configured to receive an uplink signal transmitted by the terminal, where the uplink signal is used for indicating an identifier of the terminal or an identifier of a group in which the terminal is located; or

a fourth transmitting module, configured to transmit an advance indication signal to the terminal, where the advance indication signal includes at least one of a wake-up signal WUS, a go-to-sleep signal GTS, DCP, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

Optionally, the network access apparatus 500 further includes:

a fifth transmitting module, configured to transmit a response message to the terminal after receiving the uplink signal transmitted by the terminal, where the response message is used for indicating at least one of the following:

that the network-side device receives a feedback of the uplink signal; or

that whether there is the paging message of the terminal or the paging message of the group in which the terminal is located.

Optionally, the response message carries at least one of the advance indication signal or indication information, where the indication information is used for indicating information about a transmission reception point that receives the paging message.

Optionally, the advance indication signal is SFN-specific, or cell or transmission reception point-specific; or the response message is SFN-specific, or cell or transmission reception point-specific.

Optionally, the reference signal includes at least one of a synchronization signal block SSB, a CSI reference signal CSI-RS, a cell reference signal CRS, a sounding reference signal SRS, or a demodulation reference signal DMRS.

Optionally, the network access apparatus 500 further includes:

a sixth transmitting module, configured to transmit SFN-related configuration information to the terminal, where the SFN-related configuration information includes at least one of the SFN-specific reference signal, SFN-specific system information, the SFN-specific paging message, or an SFN random access channel.

Optionally, the network-side device transmits the SFN-related configuration information to the terminal through at least one of system broadcast, an RRC dedicated message, or the paging message.

Optionally, the network access apparatus 500 further includes:

an access barring module, configured to bar the terminal from accessing an SFN-specific cell in a case that the terminal does not support an SFN.

As shown in FIG. 8, this embodiment of this application further provides a communication device 600, including a processor 601, a memory 602, and a program or an instruction stored in the memory 602 and executable on the processor 601. For example, when the communication device 600 is a terminal, the program or instruction is executed by the processor 601 to implement various processes of the network access method embodiment, and may implement the same technical effect. When the communication device 600 is a network-side device, the program or the instruction is executed by the processor 601 to implement the various processes of the network access method embodiment, and may implement the same technical effect, which will not be described in detail herein again to avoid repetition.

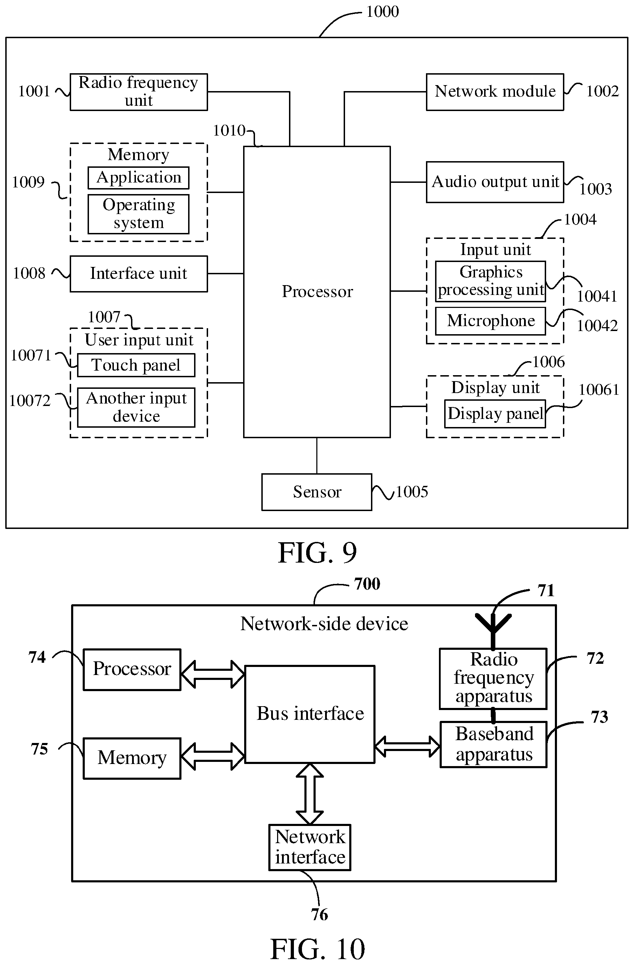

FIG. 9 is a schematic diagram of a hardware structure of a terminal according to an embodiment of this application.

The terminal 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) for supplying power to the components. The power supply may be logically connected to the processor 1010 by a power management system, thereby implementing functions such as charging, discharging, and power consumption management by using the power management system. A terminal structure shown in FIG. 9 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition apparatus (for example, a camera) in a video acquisition mode or an image acquisition mode. The display unit 1006 may include a display panel 10061, and the display panel 10061 may be configured by using a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which are not described herein in detail.

In this embodiment of this application, the radio frequency unit 1001 receives downlink data from a network-side device and transmits the downlink data to the processor 1010 for processing; and transmits uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application program or instruction required by at least one function (such as a sound playback function and an image display function), and the like. In addition, the memory 1009 may include a high-speed random access memory, and may further include a non-volatile memory, where the non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. Such as at least one magnetic disk storage device, a flash memory device, or other non-volatile solid-state storage devices.

The processor 1010 may include one or more processing units. Optionally, the processor 1010 may integrate an application processor and a modem, where the application processor mainly processes an operating system, a user interface, and an application program or instruction, and the modem mainly processes wireless communication, such as a baseband processor. It may be understood that the foregoing modem may either not be integrated into the processor 1010.

The radio frequency unit 1001 or the processor 1010 is configured to:

receive a reference signal transmitted by a network-side device, where the reference signal includes a first reference signal, or includes a first reference signal and a second reference signal; and the first reference signal is a single-frequency network SFN-specific reference signal, or the second reference signal is a cell or transmission reception point-specific reference signal; and
perform an initial access-related operation based on the received reference signal.

Optionally, the radio frequency unit 1001 or the processor 1010 is further used for at least one of the following:

performing cell selection or reselection;
receiving system information transmitted by the network-side device;
receiving a paging message transmitted by the network-side device;
receiving advance indication information transmitted by the network-side device; or
initiating random access to the network-side device.

Optionally, the radio frequency unit 1001 or the processor 1010 is further configured to:

measure the reference signal;
perform cell selection or reselection according to a measurement result; and
cause the terminal to camp on a first cell or a second cell according to a result of the cell selection or reselection, where the first cell is an SFN-specific cell, or the second cell is a cell or transmission reception point-specific cell or transmission reception point.

Optionally, the radio frequency unit 1001 or the processor 1010 is further configured to:

receive the system information transmitted by the network-side device at a layer on which the terminal camps; or
receive the paging message transmitted by the network-side device at a layer on which the terminal camps; or
receive the advance indication information transmitted by the network-side device at a layer on which the terminal camps; or
initiate the random access to the network-side device at a layer on which the terminal camps, where
the layer on which the terminal camps is a first layer in a case that the terminal camps on the first cell; or the layer on which the terminal camps is a second layer in a case that the terminal camps on the second cell, where the first layer is an SFN layer, and the second layer is a cell layer or a transmission reception point layer.

Optionally, the radio frequency unit 1001 or the processor 1010 is further configured to:
receive a third reference signal transmitted by the network-side device after the terminal successfully accesses a network, where the third reference signal is a cell or transmission reception point-specific reference signal.

Optionally, the third reference signal is transmitted through an SFN-specific system message, or through a cell or transmission reception point-specific system message, or through dedicated RRC information, or through a message 2 or a message 4 in a random access process.

Optionally, at least one of the paging message or the system message is SFN-specific.

Optionally, the paging message and the system message are SFN-specific; or

the paging message is SFN-specific, and the system message is cell or transmission reception point-specific; or
the paging message is cell or transmission reception point-specific, and the system message is SFN-specific; or
the paging message includes an SFN-specific paging message and a cell or transmission reception point-specific paging message; or
the system message includes an SFN-specific system message and a cell or transmission reception point-specific system message.

Optionally, the radio frequency unit 1001 or the processor 1010 is further configured to,
in a case that the system message indicates that there is an SFN-specific random access resource, cause the terminal to initiate the random access to the network-side device by using the random access resource.

Optionally, a resource of the first reference signal and a resource of the second reference signal are independent of each other; or
a resource of the first reference signal is a subset of a resource of the second reference signal.

Optionally, the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

Optionally, the terminal identifies the first reference signal by using at least one of a reference signal identifier, a physical cell identifier, frequency domain configuration information, time domain configuration information, or code domain configuration information.

Optionally, a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, where
the first physical cell identifier is an SFN-specific physical cell identifier, or the second physical cell identifier is a physical cell identifier of the cell or transmission reception point-specific cell or transmission reception point.

Optionally, the first physical cell identifier is transmitted to the terminal by the network-side device through the system message.

Optionally, the first physical cell identifier is different from the second physical cell identifier in a case that the SFN-specific cell and the cell or transmission reception point-specific cell are deployed on a same frequency; or
the first physical cell identifier is the same as or different from the second physical cell identifier in a case that the SFN-specific cell and the cell or transmission reception point-specific cell are deployed on different frequencies.

Optionally, in a case that a network is deployed with a high frequency range and a low frequency range, the SFN-specific cell includes a cell in the low frequency range, and the cell or transmission reception point-specific cell includes a cell in the high frequency range; or
in a case that a network includes a satellite communication network, the SFN-specific cell includes a high altitude platform station cell or a high-orbit satellite cell, and the cell or transmission reception point-specific cell includes a low-orbit satellite cell or a cell covered by a ground base station.

Optionally, the radio frequency unit 1001 or the processor 1010 is further used for at least one of the following:

transmitting an uplink signal to the network-side device, where the uplink signal is used for indicating an identifier of the terminal or an identifier of a group in which the terminal is located; or

receiving an advance indication signal transmitted by the network-side device, where the advance indication signal includes at least one of a wake-up signal WUS, a go-to-sleep signal GTS, DCP, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

Optionally, the radio frequency unit 1001 or the processor 1010 is further configured to:
receive a response message transmitted by the network-side device, where the response message is used for indicating at least one of the following:

that the network-side device receives a feedback of the uplink signal; or
that whether there is the paging message of the terminal or the paging message of the group in which the terminal is located.

Optionally, the response message carries at least one of the advance indication signal or indication information, where the indication information is used for indicating information about a transmission reception point that receives the paging message.

Optionally, the advance indication signal is SFN-specific, or cell or transmission reception point-specific; or the response message is SFN-specific, or cell or transmission reception point-specific.

Optionally, the reference signal includes at least one of a synchronization signal block SSB, a CSI reference signal CSI-RS, a cell reference signal CRS, a sounding reference signal SRS, or a demodulation reference signal DMRS.

Optionally, the radio frequency unit 1001 or the processor 1010 is further configured to:
obtain SFN-related configuration information, where the SFN-related configuration information includes at least one of the SFN-specific reference signal, SFN-specific system information, the SFN-specific paging message, or an SFN random access channel.

Optionally, the terminal obtains the SFN-related configuration information through at least one of system broadcast, an RRC dedicated message, or the paging message.

Optionally, the radio frequency unit 1001 or the processor 1010 is further configured to:
regard, by the terminal, an SFN-specific cell as a cell that is barred from being accessed in a case that the terminal does not support an SFN.

In this embodiment of this application, a system design deployed through the SFN provides a technical solution for the terminal to perform network access based on an SFN-specific reference signal, so that the terminal may successfully access the SFN. Because the terminal does not need to frequently perform cell selection, reselection, or switching between cells in an SFN range, and a measurement frequency of the terminal is reduced, network overhead and power consumption of the terminal may be reduced.

This embodiment of this application further provides a network-side device. As shown in FIG. 10, the network-side device 700 includes: an antenna 71, a radio frequency apparatus 72, and a baseband apparatus 73. The antenna 71 is connected with the radio frequency apparatus 72. In an uplink direction, the radio frequency apparatus 72 receives information through the antenna 71, and transmits the received information to the baseband apparatus 73 for processing. In a downlink direction, the baseband apparatus 73 performs processing on the to-be- transmitted information, and transmits the to-be-transmitted information to the radio frequency apparatus 72. After performing processing on the received information, the radio frequency apparatus 72 transmits the received information out through the antenna 71.

The frequency band processing apparatus may be located in the baseband apparatus 73, and the method performed by the network-side device in the foregoing embodiments may be implemented in the baseband apparatus 73. The baseband apparatus 73 includes a processor 74 and a memory 75.

The baseband apparatus 73 may include, for example, at least one baseband board, and a plurality of chips are arranged on the baseband board. As shown in FIG. 10, for example, one of the chips is a processor 74, and is connected with the memory 75, to invoke a program in the memory 75, and to perform the network device operation shown in the foregoing method embodiments.

The baseband apparatus 73 may further include a network interface 76 used for exchanging information with the radio frequency apparatus 72. For example, the interface is a common public radio interface (common public radio interface, CPRI).

Specifically, the network-side device of this embodiment of the present invention further includes: an instruction or a program stored in the memory 75 and executable on the processor 74. The processor 74 invokes the instruction or program in the memory 75 to perform the method performed by each module shown in FIG. 7, and implements the same technical effect, which will not be described in detail herein again to avoid repetition.

This embodiment of this application further provides a readable storage medium storing therein a program or an instruction. The program or instruction, when executed by a processor, implements various processes of the network access method embodiment, and may implement the same technical effects, which will not be described in detail herein again to avoid repetition.

The processor is a processor in the terminal or network-side device described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

This embodiment of this application further provides a chip, including a processor and a communication interface, where the communication interface is coupled to the processor. The processor is configured to run a program or an instruction to implement various processes of the network access method embodiment, and may implement the same technical effects, which will not be described in detail herein again to avoid repetition.

It should be understood that, the chip mentioned in this embodiment of this application may further be referred to as a system-level chip, a system chip, a chip system, a system on chip, or the like.

It is to be noted that, the term " include", "comprise", or any other variation thereof in this specification intends to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

It may be understood that, a division of each module of the device is only a division of logical functions, and may be fully or partially integrated into a physical entity in actual implementation, and may also be physically separated. The modules may all be implemented in the form of software invoked by a processing element, or implemented in the form of hardware, and some modules may further be implemented in the form of software invoked by a processing element, and some modules may be implemented in the form of hardware. For example, the receiving module may be an independently disposed processing element, or may be integrated in a chip of the foregoing apparatus. In addition, the receiving module may also be stored in a memory of the foregoing apparatus in the form of program code, and a processing element of the foregoing apparatus invokes and executes a function of the receiving module. The implementation of other modules is similar. In addition, all or some of the modules may be integrated together, or may be implemented independently. The processing element may be an integrated circuit and has a signal processing capability. In an implementation process, steps in the foregoing methods or the foregoing modules can be implemented by using a hardware integrated logical circuit in a processor element, or by using instructions in a form of software.

For example, each module, unit, subunit, or submodule may be one or more integrated circuits configured to implement the foregoing methods, for example, one or more application specific integrated circuits (Application Specific Integrated Circuit, ASIC), or one or more digital signal processors (digital signal processor, DSP), or one or more field programmable gate arrays (field programmable gate array, FPGA). In another example, when a module described above is implemented in a form of a processing element scheduling program code, the processing element may be a general-purpose processor, for example, a central processing unit (Central Processing Unit, CPU) or another processor that can invoke program code. In another example, such modules may be integrated together and implemented in a form of a system-on-a-chip (system-on-a-chip, SOC).

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

**Claims**

1.  A network access method, applied to a terminal and comprising:

    receiving a reference signal transmitted by a network-side device, wherein the reference signal comprises a first reference signal, or comprises a first reference signal and a second reference signal; and the first reference signal is a single-frequency network SFN-specific reference signal, or the second reference signal is a cell or transmission reception point-specific reference signal; and
    performing an initial access-related operation based on the received reference signal.

2.  The method according to claim 1, wherein the performing an initial access-related operation based on the received reference signal comprises at least one of the following:

    performing cell selection or reselection;
    receiving system information transmitted by the network-side device;
    receiving a paging message transmitted by the network-side device;
    receiving advance indication information transmitted by the network-side device; or
    initiating random access to the network-side device.

3.  The method according to claim 2, wherein the performing cell selection or reselection comprises:

    measuring the reference signal;
    performing cell selection or reselection according to a measurement result; and
    camping on, by the terminal, a first cell or a second cell according to a result of the cell selection or reselection, wherein the first cell is an SFN-specific cell, or the second cell is a cell or transmission reception point-specific cell or transmission reception point.

4.  The method according to claim 3, wherein the terminal receives the system information transmitted by the network-side device at a layer on which the terminal camps; or

    the terminal receives the paging message transmitted by the network-side device at a layer on which the terminal camps; or
    the terminal receives the advance indication information transmitted by the network-side device at a layer on which the terminal camps; or
    the terminal initiates the random access to the network-side device at a layer on which the terminal camps, wherein
    the layer on which the terminal camps is a first layer in a case that the terminal camps on the first cell; or the layer on which the terminal camps is a second layer in a case that the terminal camps on the second cell, wherein the first layer is an SFN layer, and the second layer is a cell layer or a transmission reception point layer.

5.  The method according to claim 2, wherein after the terminal successfully accesses a network, the method further comprises:
    receiving a third reference signal transmitted by the network-side device, wherein the third reference signal is a cell or transmission reception point-specific reference signal.

6.  The method according to claim 5, wherein the third reference signal is transmitted through an SFN-specific system message, or through a cell or transmission reception point-specific system message, or through dedicated radio resource control RRC information, or through a message 2 or a message 4 in a random access process.

7.  The method according to claim 2, wherein at least one of the paging message or the system message is SFN-specific.

8.  The method according to claim 7, wherein the paging message and the system message are SFN-specific; or

    the paging message is SFN-specific, and the system message is cell or transmission reception point-specific; or
    the paging message is cell or transmission reception point-specific, and the system message is SFN-specific; or
    the paging message comprises an SFN-specific paging message and a cell or transmission reception point-specific paging message; or
    the system message comprises an SFN-specific system message and a cell or transmission reception point-specific system message.

9. The method according to claim 2, wherein the initiating random access to the network-side device comprises:
in a case that the system message indicates that there is an SFN-specific random access resource, initiating, by the terminal, the random access to the network-side device by using the random access resource.

10. The method according to any one of claims 1 to 9, wherein a resource of the first reference signal and a resource of the second reference signal are independent of each other; or
a resource of the first reference signal is a subset of a resource of the second reference signal.

11. The method according to any one of claims 1 to 9, wherein the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

12. The method according to any one of claims 1 to 9, wherein the terminal identifies the first reference signal by using at least one of a reference signal identifier, a physical cell identifier, frequency domain configuration information, time domain configuration information, or code domain configuration information.

13. The method according to claim 12, wherein a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, wherein
the first physical cell identifier is an SFN-specific physical cell identifier, or the second physical cell identifier is a physical cell identifier of the cell or transmission reception point-specific cell or transmission reception point.

14. The method according to claim 13, wherein the first physical cell identifier is transmitted to the terminal by the network-side device through a system message.

15. The method according to claim 13, wherein the first physical cell identifier is different from the second physical cell identifier in a case that the SFN-specific cell and the cell or transmission reception point-specific cell are deployed on a same frequency; or
the first physical cell identifier is the same as or different from the second physical cell identifier in a case that the SFN-specific cell and the cell or transmission reception point-specific cell are deployed on different frequencies.

16. The method according to any one of claims 1 to 9, wherein in a case that a network is deployed with a high frequency range and a low frequency range, the SFN-specific cell comprises a cell in the low frequency range, and the cell or transmission reception point-specific cell comprises a cell in the high frequency range; or
in a case that a network comprises a satellite communication network, the SFN-specific cell comprises a high altitude platform station cell or a high-orbit satellite cell, and the cell or transmission reception point-specific cell comprises a low-orbit satellite cell or a cell covered by a ground base station.

17. The method according to any one of claims 2 to 9, wherein before the receiving a paging message transmitted by the network-side device, the method further comprises at least one of the following:

transmitting an uplink signal to the network-side device, wherein the uplink signal is used for indicating an identifier of the terminal or an identifier of a group in which the terminal is located; or
receiving an advance indication signal transmitted by the network-side device, wherein the advance indication signal comprises at least one of a wake-up signal WUS, a go-to-sleep signal GTS, downlink control information DCP scrambled by a power-saving PS-RNTI, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

18. The method according to claim 17, wherein after the transmitting an uplink signal to the network-side device, the method further comprises:
receiving a response message transmitted by the network-side device, wherein the response message is used for indicating at least one of the following:

that the network-side device receives a feedback of the uplink signal; or
that whether there is the paging message of the terminal or the paging message of the group in which the terminal is located.

19. The method according to claim 18, wherein the response message carries at least one of the advance indication signal or indication information, wherein the indication information is used for indicating information about a transmission reception point that receives the paging message.

20. The method according to claim 18, wherein the advance indication signal is SFN-specific, or cell or transmission reception point-specific; or
the response message is SFN-specific, or cell or transmission reception point-specific.

21. The method according to any one of claims 1 to 9, wherein the reference signal comprises at least one of a synchronization signal block SSB, a CSI reference signal CSI-RS, a cell reference signal CRS, a sounding reference signal SRS, or a demodulation reference signal DMRS.

22. The method according to any one of claims 1 to 9, further comprising:
obtaining SFN-related configuration information, wherein the SFN-related configuration information comprises at least one of the SFN-specific reference signal, SFN-specific system information, the SFN-specific paging message, or an SFN random access channel.

23. The method according to claim 22, wherein the terminal obtains the SFN-related configuration information through at least one of system broadcast, an RRC dedicated message, or the paging message.

24. The method according to claim 1, further comprising:
regarding, by the terminal, an SFN-specific cell as a cell that is barred from being accessed in a case that the terminal does not support an SFN.

25. A network access apparatus, comprising:

a first receiving module, configured to receive a reference signal transmitted by a network-side device, wherein the reference signal comprises a first reference signal, or comprises a first reference signal and a second reference signal; and the first reference signal is a single-frequency network SFN-specific reference signal, or the second reference signal is a cell or transmission reception point-specific reference signal; and
an execution module, configured to perform an initial access-related operation based on the received reference signal.

26. The apparatus according to claim 25, wherein the execution module is configured to execute at least one of the following:

performing cell selection or reselection;
receiving system information transmitted by the network-side device;
receiving a paging message transmitted by the network-side device;
receiving advance indication information transmitted by the network-side device; or
initiating random access to the network-side device.

27. The apparatus according to claim 26, wherein the execution module comprises:

a measurement submodule, configured to measure the reference signal;
a selection submodule, configured to perform cell selection or reselection according to a measurement result; and

a camping submodule, configured to cause the terminal to camp on a first cell or a second cell according to a result of the cell selection or reselection, wherein the first cell is an SFN-specific cell, or the second cell is a cell or transmission reception point-specific cell or transmission reception point.

28. A network access method, applied to a network-side device and comprising:
transmitting a reference signal to a terminal, wherein the reference signal comprises a first reference signal, or comprises a first reference signal and a second reference signal; and the first reference signal is a single-frequency network SFN-specific reference signal, or the second reference signal is a cell or transmission reception point-specific reference signal.

29. The method according to claim 28, wherein in a case that the terminal camps on a cell, the method further comprises:

transmitting system information to the terminal at a layer on which the terminal camps; or
transmitting a paging message to the terminal at a layer on which the terminal camps; or
transmitting advance indication information to the terminal at a layer on which the terminal camps, wherein the layer on which the terminal camps is a first layer in a case that the terminal camps on a first cell; or the layer on which the terminal camps is a second layer in a case that the terminal camps on a second cell, wherein the first cell is an SFN-specific cell, and the first layer is an SFN layer, or the second cell is a cell or transmission reception point-specific cell or transmission reception point, and the second layer is a cell layer or a transmission reception point layer.

30. The method according to claim 28, wherein after the terminal successfully accesses a network, the method further comprises:
transmitting a third reference signal to the terminal, wherein the third reference signal is a cell or transmission reception point-specific reference signal.

31. The method according to claim 30, wherein the third reference signal is transmitted through an SFN-specific system message, or through a cell or transmission reception point-specific system message, or through dedicated radio resource control RRC information, or through a message 2 or a message 4 in a random access process.

32. The method according to claim 29, wherein at least one of the paging message or the system message is SFN-specific.

33. The method according to claim 32, wherein the paging message and the system message are SFN-specific; or

the paging message is SFN-specific, and the system message is cell or transmission reception point-specific; or
the paging message is cell or transmission reception point-specific, and the system message is SFN-specific; or
the paging message comprises an SFN-specific paging message and a cell or transmission reception point-specific paging message; or
the system message comprises an SFN-specific system message and a cell or transmission reception point-specific system message.

34. The method according to any one of claims 28 to 33, wherein a resource of the first reference signal and a resource of the second reference signal are independent of each other; or
a resource of the first reference signal is a subset of a resource of the second reference signal.

35. The method according to any one of claims 28 to 33, wherein the first reference signal and the second reference signal have at least one of the following relations:

that the first reference signal and the second reference signal are respectively mapped on different time domain resources;
that the first reference signal and the second reference signal are respectively mapped on different code domain resources; or
that the first reference signal and the second reference signal are respectively mapped on different frequency domain resources.

36. The method according to any one of claims 28 to 33, wherein the terminal identifies the first reference signal by using at least one of a reference signal identifier, a physical cell identifier, frequency domain configuration information, time domain configuration information, or code domain configuration information.

37. The method according to claim 36, wherein a first physical cell identifier is the same as a second physical cell identifier; or

a first physical cell identifier and a second physical cell identifier are independent of each other, and at least one of the first physical cell identifier or the second physical cell identifier is used for the terminal to identify a cell on which or a transmission reception point at which the terminal is located, wherein the first physical cell identifier is an SFN-specific physical cell identifier, or the second physical cell identifier is a physical cell identifier of the cell or transmission reception point-specific cell or transmission reception point.

38. The method according to claim 37, wherein the first physical cell identifier is transmitted to the terminal by the network-side device through the system message.

39. The method according to claim 37, wherein the first physical cell identifier is different from the second physical cell identifier in a case that the SFN-specific cell and the cell or transmission reception point-specific cell are deployed on a same frequency; or
the first physical cell identifier is the same as or different from the second physical cell identifier in a case that the SFN-specific cell and the cell or transmission reception point-specific cell are deployed on different frequencies.

40. The method according to any one of claims 28 to 33, wherein in a case that a network is deployed with a high frequency range and a low frequency range, the SFN-specific cell comprises a cell in the low frequency range, and the cell or transmission reception point-specific cell comprises a cell in the high frequency range; or
in a case that a network comprises a satellite communication network, the SFN-specific cell comprises a high altitude platform station cell or a high-orbit satellite cell, and the cell or transmission reception point-specific cell comprises a low-orbit satellite cell or a cell covered by a ground base station.

41. The method according to any one of claims 29 to 33, wherein before the transmitting a paging message to the terminal, the method further comprises at least one of the following:

receiving an uplink signal transmitted by the terminal, wherein the uplink signal is used for indicating an identifier of the terminal or an identifier of a group in which the terminal is located; or
transmitting an advance indication signal to the terminal, wherein the advance indication signal comprises at least one of a wake-up signal WUS, a go-to-sleep signal GTS, DCP, or a pre-indication, and the advance indication signal is used for indicating that whether the terminal receives the paging message and/or a PDCCH corresponding to the paging message in several subsequent discontinuous reception DRX periods, or is used for indicating that whether there is a paging message of the terminal or a paging message of a group in which the terminal is located.

42. The method according to claim 41, wherein after the receiving an uplink signal transmitted by the terminal, the method further comprises:
transmitting a response message to the terminal, wherein the response message is used for indicating at least one of the following:

that the network-side device receives a feedback of the uplink signal; or
that whether there is the paging message of the terminal or the paging message of the group in which the terminal is located.

43. The method according to claim 42, wherein the response message carries at least one of the advance indication signal or indication information, wherein the indication information is used for indicating information about a transmission reception point that receives the paging message.

44. The method according to claim 42, wherein the advance indication signal is SFN-specific, or cell or transmission reception point-specific; or
the response message is SFN-specific, or cell or transmission reception point-specific.

45. The method according to any one of claims 28 to 33, wherein the reference signal comprises at least one of a synchronization signal block SSB, a CSI reference signal CSI-RS, a cell reference signal CRS, a sounding reference signal SRS, or a demodulation reference signal DMRS.

**46.** The method according to any one of claims 28 to 33, further comprising:
transmitting SFN-related configuration information to the terminal, wherein the SFN-related configuration information comprises at least one of the SFN-specific reference signal, SFN-specific system information, the SFN-specific paging message, or an SFN random access channel.

**47.** The method according to claim 46, wherein the network-side device transmits the SFN-related configuration information to the terminal through at least one of system broadcast, an RRC dedicated message, or the paging message.

**48.** The method according to claim 28, further comprising:
barring the terminal from accessing an SFN-specific cell in a case that the terminal does not support an SFN.

**49.** A network access apparatus, comprising:
a first transmitting module, configured to transmit a reference signal to a terminal, where the reference signal comprises a first reference signal, or comprises a first reference signal and a second reference signal; and the first reference signal is a single-frequency network SFN-specific reference signal, or the second reference signal is a cell or transmission reception point-specific reference signal.

**50.** The apparatus according to claim 49, further comprising a second transmitting module, the second transmitting module configured to:

transmit system information to the terminal at a layer on which the terminal camps; or
transmit a paging message to the terminal at a layer on which the terminal camps; or
transmit advance indication information to the terminal at a layer on which the terminal camps, wherein
the layer on which the terminal camps is a first layer in a case that the terminal camps on the first cell; or the layer on which the terminal camps is a second layer in a case that the terminal camps on the second cell, wherein the first layer is an SFN layer, and the second layer is a cell layer or a transmission reception point layer.

**51.** The apparatus according to claim 49, further comprising:
a third transmitting module, configured to transmit a third reference signal to the terminal after the terminal successfully accesses a network, wherein the third reference signal is a cell or transmission reception point-specific reference signal.

**52.** A terminal, comprising a processor, a memory, and a program or an instruction stored in the memory and executable on the processor, wherein the program or instruction, when executed by the processor, implements steps of the network access method according to any one of claims 1 to 24.

**53.** A network-side device, comprising a processor, a memory, and a program or an instruction stored in the memory and executable on the processor, wherein the program or instruction, when executed by the processor, implements steps of the network access method according to any one of claims 28 to 48.

**54.** A readable storage medium, storing a program or an instruction, wherein the program or instruction, when executed by a processor, implements steps of the network access method according to any one of claims 1 to 24, or implements steps of the network access method according to any one of claims 28 to 48.

**55.** A chip, comprising a processor and a communication interface, wherein the communication interface is coupled to the processor, and the processor is configured to run a program or an instruction to implement steps of the network access method according to any one of claims 1 to 24, or implement steps of the network access method according to any one of claims 28 to 48.

**56.** A computer program product, stored in a non-volatile readable storage medium, the computer program product, when executed by at least one processor, implements steps of the network access method according to any one of claims 1 to 24, or implements steps of the network access method according to any one of claims 28 to 48.

**57.** A network access apparatus, configured to perform steps of the network access method according to any one of claims 1 to 24, or steps of the network access method according to any one of claims 28 to 48.

Network-side
device

11

Terminal

11

Terminal

## FIG. 1

Start

Receive a reference signal transmitted by a network-side device,
where the reference signal includes a first reference signal, or
includes a first reference signal and a second reference signal; and
the first reference signal is an SFN-specific reference signal, or
the second reference signal is a cell or transmission reception
point-specific reference signal

201

Perform an initial access-related operation based on the received
reference signal

202

End

## FIG. 2

Terminal

FIG. 3

FIG. 4

FIG. 5

Start

Transmit a reference signal to a terminal, where the reference signal includes a first reference signal, or includes a first reference signal and a second reference signal; and the first reference signal is a single-frequency network SFN-specific reference signal, or the second reference signal is a cell or transmission reception point-specific reference signal

~ 401

End

## FIG. 6

500 ⌐

| Network access apparatus |
|---|
| First transmitting module |

501 ⌐

## FIG. 7

600 ⌐

| Communication device |
|---|
| Processor ⟺ Memory |

601 ⌐     602

## FIG. 8

1000

1001 — Radio frequency unit

1002 — Network module

1010 — Processor

1009 — Memory
  - Application
  - Operating system

1003 — Audio output unit

1008 — Interface unit

1004 — Input unit
  - Graphics processing unit — 10041
  - Microphone — 10042

1007 — User input unit
10071 — Touch panel
10072 — Another input device

1006 — Display unit
  - Display panel — 10061

1005 — Sensor

FIG. 9

700

Network-side device

71

74 — Processor

75 — Memory

Bus interface

72 — Radio frequency apparatus

73 — Baseband apparatus

Network interface

76

FIG. 10

## INTERNATIONAL SEARCH REPORT

International application No.

**PCT/CN2021/121247**

| A. | CLASSIFICATION OF SUBJECT MATTER |
|---|---|

H04W 48/18(2009.01)i

According to International Patent Classification (IPC) or to both national classification and IPC

| B. | FIELDS SEARCHED |
|---|---|

Minimum documentation searched (classification system followed by classification symbols)

H04W H04Q

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 小区, 传送与接收点, 传输与接收点, 单频网, 选择, 重选, 参考信号, 接入, cell, TRP, SFN, select, reselect, reference signal, RS, access

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 110431799 A (QUALCOMM INC.) 08 November 2019 (2019-11-08) description paragraphs 0085-0112 | 1-57 |
| Y | FUTUREWEI. "Enhancement to support HST-SFN deployment scenario" *3GPP TSG RAN WG1 #102-e R1-2005592*, 07 August 2020 (2020-08-07), full text, section 2 | 1-57 |
| A | CN 111245591 A (ZHANXUN SEMICONDUCTOR (NANJING) CO., LTD.) 05 June 2020 (2020-06-05) entire document | 1-57 |
| A | CN 110769478 A (WUHAN HONGXIN TELECOMMUNICATION TECHNOLOGIES CO., LTD.) 07 February 2020 (2020-02-07) entire document | 1-57 |
| A | CN 108234103 A (SAMSUNG ELECTRONICS CO., LTD.) 29 June 2018 (2018-06-29) entire document | 1-57 |
| A | US 2017332371 A1 (QUALCOMM INC.) 16 November 2017 (2017-11-16) entire document | 1-57 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2021** | **30 December 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/121247**

| Patent document cited in search report | | | Publication date (day/month/year) | Patent family member(s) | | | Publication date (day/month/year) |
|---|---|---|---|---|---|---|---|
| CN | 110431799 | A | 08 November 2019 | WO | 2018175908 | A1 | 27 September 2018 |
| | | | | US | 2018279374 | A1 | 27 September 2018 |
| | | | | EP | 3602940 | A1 | 05 February 2020 |
| | | | | TW | 201841521 | A | 16 November 2018 |
| CN | 111245591 | A | 05 June 2020 | None | | | |
| CN | 110769478 | A | 07 February 2020 | None | | | |
| CN | 108234103 | A | 29 June 2018 | US | 2013178220 | A1 | 11 July 2013 |
| | | | | CN | 108400859 | A | 14 August 2018 |
| | | | | WO | 2013105820 | A1 | 18 July 2013 |
| | | | | US | 2019141689 | A1 | 09 May 2019 |
| | | | | EP | 2615765 | A2 | 17 July 2013 |
| | | | | US | 2016029353 | A1 | 28 January 2016 |
| | | | | CN | 104160637 | A | 19 November 2014 |
| | | | | EP | 3595232 | A1 | 15 January 2020 |
| | | | | US | 2020077372 | A1 | 05 March 2020 |
| | | | | KR | 20130082477 | A | 19 July 2013 |
| | | | | JP | 2015503881 | A | 02 February 2015 |
| | | | | US | 2017245253 | A1 | 24 August 2017 |
| US | 2017332371 | A1 | 16 November 2017 | WO | 2017196940 | A1 | 16 November 2017 |
| | | | | EP | 3456094 | A1 | 20 March 2019 |
| | | | | CN | 109076412 | A | 21 December 2018 |

Form PCT/ISA/210 (patent family annex) (January 2015)

## REFERENCES CITED IN THE DESCRIPTION

**Patent documents cited in the description**

- CN 202011057997